Europäisches Patentamt

European Patent Office

Office européen des brevets

(11) Veröffentlichungsnummer: **0 369 349**
**A1**

## (12) EUROPÄISCHE PATENTANMELDUNG

(21) Anmeldenummer: 89120876.1

(22) Anmeldetag: 10.11.89

(51) Int. Cl.⁵: **H05H 1/34**

(30) Priorität: 14.11.88 DE 8814557 U

(43) Veröffentlichungstag der Anmeldung:
23.05.90 Patentblatt 90/21

(84) Benannte Vertragsstaaten:
AT BE CH DE ES FR GB GR IT LI LU NL SE

(71) Anmelder: **Wilhelm Merkle
Schweissmaschinenbau GmbH
Industriestrasse 3
D-8871 Kötz 1(DE)**

(72) Erfinder: **Kühnel, Horst, Dipl.-Ing. FH
Enderlestrasse 10a
D-8876 Jettingen-Scheppach(DE)**

(74) Vertreter: **Munk, Ludwig, Dipl.-Ing.
Patentanwalt Prinzregentenstrasse 1
D-8900 Augsburg(DE)**

(54) **Schneidbrenner.**

(57) Bei einem Plasmaschneidbrenner mit einer fest montierten, vorzugsweise stiftförmigen Elektrode (5) und einer koaxial hiermit in einer sie umfassenden Halterung (3) in Achsrichtung beweglich aufgenommenen, vorzugsweise topfförmigen Schneiddüse (4), die zur Erzeugung eines Pilotlichtbogens an die Elektrode (5) anstellbar ist und die mit einer Düsenbohrung (12) versehen ist, durch welche der zwischen Elektrode (5) und Schneiddüse (4) erzeugbare Lichtbogen mittels eines in die Schneiddüse (4) einleitbaren, durch eine Druckgasquelle speisbaren Gasstrom austreibbar ist, lassen sich dadurch bei der Zündung des Pilotlichtbogens eine hohe Funktionssicherheit und Bedienungsfreundlichkeit erreichen, daß anstelle des in die Schneiddüse (4) hineinführenden Strömungswegs (13, 14) ein am Außenumfang der Schneiddüse (4) endender Strömungsweg (15, 16) mit Druckgas beaufschlagt wird.

## Schneidbrenner

Die Erfindung betrifft einen Schneidbrenner, insbesondere einen Plasmaschneidbrenner, mit einer fest montierten, vorzugsweise stiftförmigen Elektrode und einer koaxial hiermit in einer sie umfassenden Halterung in Achsrichtung beweglich aufgenommenen, vorzugsweise topfförmigen Schneiddüse, die zur Erzeugung eines Pilotlichtbogens an die Elektrode anstellbar ist und die mit eine Düsenbohrung versehen ist, durch welche der Zwischenelektrode und Schneiddüse erzeugbare Lichtbogen mittels eines in die Schneiddüse einleitbaren, durch eine Druckgasquelle speisbaren Gasstroms austreibbar ist.

Bei den bekannten Anordnungen dieser Art muß die Schneiddüse zum Zünden des Pilotlichtbogens gegen die Wirkung des sie von der Elektrode abhebenden Gasstroms an die Elektrode angedrückt werden. Hierzu wird der Brenner mit seiner Schneiddüse normalerweise auf das Werkstück aufgesetzt und mit entsprechender Kraft an dieses angedrückt. Dies ist umständlich und kraftaufwendig. Hinzu kommt, daß sich das Werkstück unter der Wirkung der Andrückkraft in unerwünschter Weise durchbiegen kann, sofern es sich hierbei um dünneres Blech handelt. Die bekannten Anordnungen erweisen sich dementsprechend als nicht bedienungsfreundlich, zuverlässig und universell genug.

Hiervon ausgehend ist es daher die Aufgabe der vorliegenden Erfindung, einen Schneidbrenner eingangs erwähnter Art mit einfachen und kostengünstigen Mitteln so zu verbessern, daß der Pilotlichtbogen ohne Kraftanstrengung unabhängig von einem Werkstück zuverlässig erzeugbar ist.

Diese Aufgabe wird erfindungsgemäß dadurch gelöst, daß der in die Schneiddüse einleitbare Gasstrom zumindest teilweise absperrbar ist und daß der Schneiddüse eine Verschiebeeinrichtung zugeordnet ist, mittels der sie bei zumindest gedrosseltem Gasstrom an die Elektrode anstellbar ist.

Mit diesen Maßnahmen werden die eingangs erwähnten Nachteile vollständig beseitigt. Infolge der Drosselung bzw. Absperrung des in die Schneiddüse einleitbaren Gasstroms sind die erforderlichen Verschiebekräfte zum Anstellen der Schneiddüse an die Elektrode verhältnismäßig klein. Die zur Bewerkstelligung einer automatischen Anstellung der Schneiddüse an die Elektrode vorgesehene Verschiebeeinrichtung kann daher leicht dimensioniert/und dementsprechend kompakt ausgebildet sein. Dennoch sind infolge der kraftgetriebenen Anstellbewegung eine hohe Zuverlässigkeit und Bedienungsfreundlichkeit gewährleistet. Ein besonderer Vorteil der erfindungsgemäßen Maßnahmen ist jedoch darin zu sehen, daß der Pilotlichtbogen mit Hilfe der erfindungsgemäßen Anstelleinrichtung frei, d. h. in jeder gewünschten Position des Brenners, erzeugbar ist. Es ist daher in vorteilhafter Weise möglich, den Brenner erst nach erfolgter Zündung des Pilotlichtbogens auf ein Werkstück aufzusetzen, was eine hohe Präzision gewährleistet.

In vorteilhafter Ausgestaltung der übergeordneten Maßnahmen kann die Schneiddüse, die in an sich bekannter Weise einen quer zur Achse verlaufenden, vorzugsweise als Flansch ausgebildeten Stützvorsprung aufweist, der kolbenförmig in eine Kammer der Halterung eingreift, im Bereich des Stützvorsprungs einer Druckdifferenz mit Überdruck in Anstellrichtung ausgesetzt werden. Diese Maßnahmen ergeben eine einfache Ausgestaltung der Verschiebeeinrichtung als Zylinder-Kolbenaggregat, wobei durch Druck- bzw. Vakuumbeaufschlagung die gewünschte Verschiebekraft erzeugbar ist. Es ergeben sich somit eine hohe Funktionssicherheit bei einfachem Aufbau.

In weiterer Fortbildung der überge-ordneten Maßnahmen kann die den Stützvorsprung aufnehmende Kammer im Bereich ihrer in Anstellrichtung hinteren Seite an die Druckgasquelle anschließbar sein. Hierbei ergibt sich ein besonders geringer Bauaufwand, da die Druckgasquelle zum Austreiben des Pilotlichtbogens ohnehin benötigt wird. Da diese Druckgasquelle beim Zünden des Pilotlichtbogens keinen weiteren Verbraucher zu versorgen hat, ist gleichzeitig eine hohe Zuverlässigkeit gewährleistet.

Zweckmäßig kann von der den Stützvorsprung aufnehmenden Kammer eine Druckleitung abgehen, die mittels eines Umschaltventils gegenläufig zu dem in die Schneiddüse hineinführenden Strömungsweg gegenüber der Druckgasquelle auf- bzw. absteuerbar ist. Hierbei läßt sich in vorteilhafter Weise eine einfache und übersichtliche Bedienung mittels eines im Bereich des Brennergriffs angeordneten Betätigungskopfes etc. bewerkstelligen.

Weitere zweckmäßige Ausgestaltungen und vorteilhafte Weiterbildungen der übergeordneten Maßnahmen sind in den restlichen Unteransprüchen angegeben.

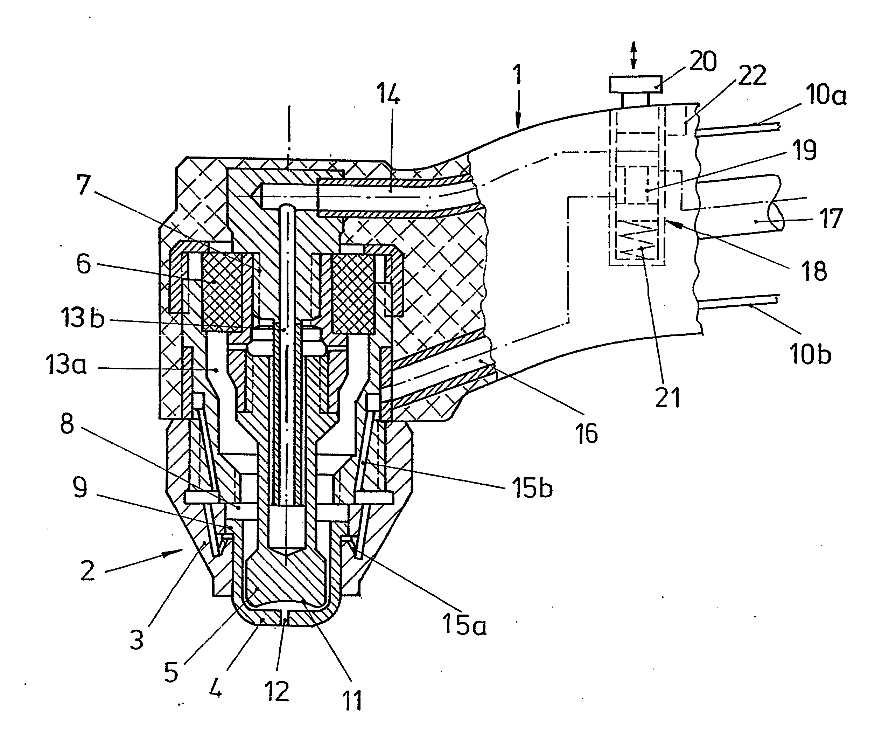

Nachstehend wird ein Ausführungsbeispiel der Erfindung anhand der Zeichnung näher erläutert. Die einzige Figur der Zeichnung zeigt einen Schnitt durch einen erfindungsgemäßen Plasmaschneidbrenner.

Der der Zeichnung zugrundeliegende Plasmaschneidbrenner enthält einen an einem aus Isoliermaterial bestehenden Griff 1 aufgenommenen Schneidkopf 2. Dieser enthält eine in einer ringförmigen Halterung 3 aufgenommene, topfförmige Schneiddüse 4, in die eine stiftförmige Elektrode 5 eingreift, die an einem durch einen Isolierring 6 von der Schneiddüse 4 zugeordneten Halterung 3 isolierten Halter 7 befestigt ist. Die Elektrode 5 ist dementsprechend unbeweglich angeordnet. Die koaxial zur Elektrode 5 angeordnete, das vordere Elektrodenende aufnehmende Schneiddüse 4 ist in Achsrichtung verschiebbar in der zugeordneten Halterung 3 aufgenommen. Hierzu ist diese mit einer die der Schneiddüse 4 zugeordnete Bohrung begrenzten, umlaufenden Ringnut 8 versehen, in die ein am hinteren, offenen Rand der topfförmigen Schneiddüse 4 angeordneter, nach außen abstehender Flansch 9 eingreift. Die Ringnut 8 besitzt gegenüber der Dicke des Flansches 9 soviel axiales Übermaß, daß die Schneiddüse 4 mit ihrem vorderen Bodenbereich an die gegenüberliegende Stirnseite der Elektrode anstellbar ist.

Die Schneiddüse 4 und die Elektrode 5 sind mittels im Griff 1 verlegter Versorgungsleitungen 10a, 10b mit unterschiedlichen Polen einer Stromquelle verbindbar. Zum Zünden eines Pilotlichtbogens wird die Schneiddüse 4 an die Elektrode 5 angedrückt. Die vordere Stirnseite der Elektrode 5 ist im dargestellten Ausführungsbeispiel in Form einer Kalotte 11 ausgebildet, so daß sich eine ringförmige Berührung mit dem gegenüberliegenden Bodenbereich der Schneiddüse 4 und dementsprechend eine zuverlässige Zündung des Pilotlichtbogens zwischen den an unterschiedlichen Polen einer Stromquelle liegenden Teilen in Form der Schneiddüse 4 und der Elektrode 5 ergeben.

Der zunächst zwischen Schneiddüse 4 und Elektrode 5 erzeugte Pilotlichtbogen wird anschließend in einen Arbeitslichtbogen zwischen der Elektrode 5 und dem zu bearbeitenden Werkstück überführt, das an denselben Pol wie die Schneiddüse 4 gelegt wird. Hierzu wird der Pilotlichtbogen mittels eines in die Schneiddüse 4 einleitbaren Gasstroms aus der Schneiddüse 4 ausgetrieben. Diese ist hierzu mit einer koaxial angeordneten Düsenbohrung 12 versehen, über die der Gasstrom mit dem Lichtbogen austreten kann, wodurch dieser automatisch auf das Werkstück überspringt, sobald dieses anstelle der Schneiddüse 4 mit dem entsprechenden Pol der Stromquelle verbunden ist. Der Strömungsweg des der Schneiddüse 4 zugeführten Druckgases ist als die in die Schneiddüse 4 eingreifende Elektrode 5 umgebender Kühlkanal 13a ausgebildet, der im Bereich des hinteren Elektrodenendes mit einem in die Elektrode 5 eingreifenden Kühlkanal 13b verbunden ist, der an eine zu einer Druckgasquelle führende Versorgungsleitung 14 angeschlossen ist.

Durch den Druck des in die Schneiddüse 4 eingeleiteten Gasstroms wird die Schneiddüse 4 bis auf Anschlag aus der zugeordneten Halterung 3 ausgefahren, d. h. der Bodenbereich der Schneiddüse 4 wird vom vorderen, kalottenförmigen Ende der Elektrode 5 abgehoben. Um dennoch die Erzeugung eines Pilotlichtbogens zu erleichtern, ist der in die Schneiddüse 4 einleitbare Gasstrom zum Zünden des Pilotlichtbogens ganz oder teilweise absperrbar, wodurch die die Schneiddüse 4 von der Elektrode 5 abhebende Kraft entfällt. Gleichzeitig wird die Schneiddüse 4 durch eine eine Anstellkraft erzeugende Anstelleinrichtung so weit in die zugeordnete Halterung 3 eingefahren, daß der Bodenbereich der Schneiddüse 4 auf die gegenüberliegende Stirnseite der Elektrode 5 aufläuft. Zur Bildung der Anstelleinrichtung kann die Ringnut 8 oberhalb des Flansches 9 evakuiert werden, so daß sich eine auf die Schneiddüse 4 wirkende Saugkraft ergibt. Das hierzu benötigte Vakuum kann beispielsweise mittels einer Venturidüse erzeugt werden, die anstelle der zu den Kühlkanälen 13a, 13b führenden Versorgungsleitung 14 mit der Druckgasquelle verbunden werden kann. Der vom Flansch 9 übergriffene, untere Bereich der Ringnut 8 kann dabei mittels einer hiervon abgehenden Entlüftungsbohrung mit der Atmosphäre verbunden sein.

Im dargestellten Ausführungsbeispiel wird die Schneiddüse 4 durch Druckkraft an die Elektrode 5 angestellt. Hierzu ist eine von der unteren, vom Flansch 9 übergriffenen Flanke der Ringnut 8 abgehende Druckleitung vorgesehen, die alternativ zu der den Kühlkanälen 13a, 13b zugeordneten Versorgungsleitung 14 an die Druckgasquelle anschließbar ist. Diese Druckleitung umfaßt im dargestellten Ausführungsbeispiel eine von der Ringnut 8 nach unten, hier schräg nach außen, abgehende Stichbohrung 15a, in die eine die der Schneiddüse 4 zugeordnete Halterung 5 durchgreifende Anschlußbohrung 15b mündet, die an eine parallel zur Versorgungsleitung 14 im Griff 1 verlegte Versorgungsleitung 16 angeschlossen ist. Diese wird zur Zündung des Pilotlichtbogens mit Druckgas beaufschlagt und nach erfolgter Zündung wieder entlastet, d. h. genau gegenläufig zur Versorgungsleitung 14 aktiviert bzw. passiviert. Die Versorgungsleitungen 14 und 16 sind über eine gemeinsame Anschlußleitung 17 mit einer gemeinsamen Druckgasquelle, beispielsweise einer Gasflasche, verbunden und können mittels eines im Griff 1 angeordneten Umschaltventils 18 alternativ mit der Anschlußleitung 17 verbunden bzw. hiervon getrennt werden.

Das Umschaltventil 18 ist dementsprechend als Zweiwege-Ventil ausgebildet, das einen an der Anschlußleitung 17 liegenden Eingang und zwei den Versorgungsleitungen 14 und 16 zugeordnete Ausgänge aufweist. Im dargestellten Ausführungsbeispiel ist das Umschaltventil 18 als Axialschieberventil ausgebildet, dessen Steuerschieber 19 mit einem im Bereich des Rückens des Griffs 1 vorgesehenen Schaltkopf 20 verbunden ist und durch diesen entgegen der Kraft einer Rückstellfeder 21 verschoben werden kann. In der unter der Wirkung der Rückstellfeder 21 automatisch sich einstellenden Ausgangsposition des Steuerschiebers 19 sind die Anschlußleitung 17 und die Versorgungsleitung 14 miteinander verbunden. Wenn der Schaltkopf 20 gedrückt wird, wird diese Verbindung unterbrochen und dafür eine Verbindung zwischen Anschlußleitung 17 und Versorgungsleitung 16 eröffnet, wodurch die Schneiddüse 4 unter der Wirkung des auf die Unterseite des Flansches 9 wirkenden Gasdrucks an die Elektrode 5 angestellt wird. Sobald der Schaltkopf 20 losgelassen wird, wird die Schneiddüse 4 auf ihrer Innenseite mit Druckgas beaufschlagt, das den Lichtbogen über die Düsenbohrung 12 austreibt. Der Schaltkopf 20 ist so angeordnet, daß er leicht mit Hilfe des Daumens einer den Griff 1 umfassenden Hand betätigbar ist.

Zur Erhöhung der Funktionssicherheit können die Versorgungsleitungen 14 bzw. 16 im jeweils von der Anschlußleitung 17 getrennten Zustand entlüftet und damit vollständig drucklos gestellt sein. Hierzu ist das Umschaltventil 18 einfach mit einem in die Umgebung mündenden, weiteren Ausgang 22 versehen, der über den Versorgungsleitungen 14 bzw. 16 zugeordnete Ringnuten des Steuerschiebers 19 zugänglich ist.

## Ansprüche

1. Schneidbrenner, insbesondere Plasmaschneidbrenner, mit einer fest montierten, vorzugsweise stiftförmigen Elektrode (5) und einer koaxial hiermit in einer sie umfassenden Halterung (3) in Achsrichtung beweglich aufgenommenen, vorzugsweise topfförmigen Schneiddüse (4), die zur Erzeugung eines Pilotlichtbogens an die Elektrode (5) anstellbar ist und die mit einer Düsenbohrung (12) versehen ist, durch welche der zwischen Elektrode (5) und Schneiddüse (4) erzeugbare Lichtbogen mittels eines in die Schneiddüse (4) einleitbaren, durch eine Druckgasquelle speisbaren Gasstrom austreibbar ist, dadurch gekennzeichnet, daß der Strömungsweg des in die Schneiddüse (4) einleitbaren Gasstroms zumindest teilweise absperrbar ist und daß der Schneiddüse (4) eine Verschiebeeinrichtung zugeordnet ist, mittels der sie bei zumindest gedrosseltem Gasstrom an die Elektrode (5) anstellbar ist.

2. Schneidbrenner nach Anspruch 1, dadurch gekennzeichnet, daß die Schneiddüse (4), die in an sich bekannter Weise einen quer zur Achse verlaufenden, vorzugsweise als Flansch (9) ausgebildeten Stützvorsprung aufweist, der kolbenförmig in eine vorzugsweise als Ringnut (8) ausgebildete Kammer der Halterung (3) eingreift, im Bereich des Stützvorsprungs einer Druckdifferenz mit Überdruck in Anstellrichtung aussetzbar ist.

3. Schneidbrenner nach Anspruch 2, dadurch gekennzeichnet, daß die den Stützvorsprung (9) aufnehmende Kammer (8) mittels einer von ihrer in Anstellrichtung hinteren Seite abgehenden Stichleitung (15a) an die Druckgasquelle anschließbar ist.

4. Schneidbrenner nach Anspruch 3, dadurch gekennzeichnet, daß die von der den Stützvorsprung (9) aufnehmenden Kammer (8) abgehende Druckleitung (15, 16) mittels eines Umschaltventils (18) gegenläufig zu dem in die Schneiddüse (4) hineinführenden Strömungsweg (14, 13) gegenüber der vorzugsweise durch eine gemeinsame Anschlußleitung (17) gebildeten Druckgasquelle auf- bzw. absteuerbar ist.

5. Schneidbrenner nach Anspruch 4, dadurch gekennzeichnet, daß das Umschaltventil (18) als Steuerschieber mit einem Eingang und zwei alternativ mit dem Eingang verbindbaren Ausgängen ausgebildet ist, von denen einer mit dem in die Schneiddüse (4) hineinführenden Strömungsweg (14, 13) und der andere mit der zur in Anstellrichtung hinteren Seite der Kammer (8) führenden Druckleitung (15, 16) verbunden ist.

6. Schneidbrenner nach einem der vorhergehenden Ansprüche 4, 5, dadurch gekennzeichnet, daß das Umschaltventil (18) einen vorzugsweise im Bereich des Brennergriffs (1) angeordneten Betätigungskopf (20) aufweist, mittels dessen es entgegen der Kraft einer Rückstellfeder (21) verstellbar ist.

7. Schneidbrenner nach einem der vorhergehenden Ansprüche, dadurch gekennzeichnet, daß der in die Schneiddüse (4) hineinführende Strömungsweg (14, 13) zur Zündung des Pilotlichtbogens vollständig von der Druckgasquelle trennbar udn vorzugsweise entlüftbar ist.

8. Schneidbrenner nach einem der vorhergehenden Ansprüche, dadurch gekennzeichnet, daß der in die Schneiddüse (4) hineinführende Strömungsweg zur Zündung des Pilotlichtbogens evakuierbar ist.

EP 0 369 349 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4 580 032  (D.W. CARKHUFF)<br>* Spalte 1, Zeile 64 - Spalte 2, Zeile 42; Figur 1 *<br>--- | 1-6 | H 05 H    1/34 |
| A | FR-A-2 263 063  (ROLLS-ROYCE)<br>* Seite 2, Zeile 22 - Seite 4, Zeile 7; Figur 1 *<br>--- | 1-4 | |
| A | EP-A-0 243 087  (THERMAL DYNAMICS CORP.)<br>* Zusammenfassung; Figur 1 *<br>--- | 1 | |
| A | US-A-3 794 806  (G.A. KLASSON)<br>----- | | |
| | | | **RECHERCHIERTE SACHGEBIETE (Int. Cl.5)**<br><br>H 05 H<br>B 23 K |

Der vorliegende Recherchenbericht wurde für alle Patentansprüche erstellt

| Recherchenort | Abschlußdatum der Recherche | Prüfer |
|---|---|---|
| DEN HAAG | 16-02-1990 | ERRANI C. |